(19) Europäisches Patentamt / European Patent Office / Office européen des brevets

(11) **EP 3 186 967 B1**

(12) **FASCICULE DE BREVET EUROPEEN**

(45) Date de publication et mention
de la délivrance du brevet:
**01.09.2021 Bulletin 2021/35**

(51) Int Cl.:
***H04N 19/63*** *(2014.01)*  ***H04N 19/12*** *(2014.01)*
***H04N 19/136*** *(2014.01)*

(21) Numéro de dépôt: **15762658.1**

(22) Date de dépôt: **09.07.2015**

(86) Numéro de dépôt international:
**PCT/FR2015/000142**

(87) Numéro de publication internationale:
**WO 2016/012667 (28.01.2016 Gazette 2016/04)**

(54) **PROCÉDÉ POUR CHOISIR UN ALGORITHME DE COMPRESSION EN FONCTION DU TYPE D'IMAGE**

VERFAHREN ZUR AUSWAHL EINES VOM BILDTYP ABHÄNGIGEN KOMPRESSIONSALGORITHMUS

METHOD FOR CHOOSING A COMPRESSION ALGORITHM DEPENDING ON THE IMAGE TYPE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2014 FR 1401695**

(43) Date de publication de la demande:
**05.07.2017 Bulletin 2017/27**

(73) Titulaire: **Colin, Jean-Claude
78000 Versailles (FR)**

(72) Inventeurs:
• **GERVAIS, Than Marc-Eric
F-75015 Paris (FR)**
• **LOUBET, Bruno
F-75009 Paris (FR)**
• **BESSOU, Nicolas
F-78500 Sartrouville (FR)**
• **GUIMIOT, Yves
64100 Bayonne (FR)**
• **PETITFILS, Mickael
F-77290 Mitry Mory (FR)**
• **ROQUES, Sebastien
92270 Bois-Colombes (FR)**

(56) Documents cités:
**US-A1- 2004 179 742**

• **XIN LI ET AL: "Block-based segmentation and adaptive coding for visually lossless compression of scanned documents", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, vol. 3, 7 octobre 2001 (2001-10-07), pages 450-453, XP010563380, DOI: 10.1109/ICIP.2001.958148 ISBN: 978-0-7803-6725-8**
• **WENPENG DING ET AL: "Block-based Fast Compression for Compound Images", PROCEEDINGS / 2006 IEEE INTERNATIONAL CONFERENCE ON MULTIMEDIA AND EXPO, ICME 2006 : JULY 9 - 12, 2006, HILTON, TORONTO, TORONTO, ONTARIO, CANADA, IEEE SERVICE CENTER, PISCATAWAY, NJ, 1 juillet 2006 (2006-07-01), pages 809-812, XP031032959, ISBN: 978-1-4244-0366-0**
• **SHUHUI WANG ET AL: "United coding for compound image compression", IMAGE AND SIGNAL PROCESSING (CISP), 2010 3RD INTERNATIONAL CONGRESS ON, IEEE, PISCATAWAY, NJ, USA, 16 octobre 2010 (2010-10-16), pages 566-570, XP031809666, ISBN: 978-1-4244-6513-2**

- HAO P ET AL: "Compound Image Compression for Real-Time Computer Screen Image Transmission", IEEE TRANSACTIONS ON IMAGE PROCESSING, IEEE SERVICE CENTER, PISCATAWAY, NJ, US, vol. 14, no. 8, 1 août 2005 (2005-08-01), pages 993-1005, XP011136219, ISSN: 1057-7149, DOI: 10.1109/TIP.2005.849776

- None

**Description**

Les images peuvent appartenir à des types très différents. En particulier, il existe des images très « graphiques » constituées de lignes nettes, et des images beaucoup plus « naturelles » constituées de nombreux dégradés de couleurs.

Chaque algorithme de compression utilise une représentation des données qui lui est propre. Par exemple, la compression par ondelettes sépare l'image en sous-images successives avec des transformations fréquentielles, alors que certains codecs, notamment développées par la demanderesse effectuent des différences entre les valeurs numériques de l'image. La compression adaptative des images est connue dans l'art et divulguée dans Xin Li et al. "Block-based segmentation and adaptive coding for visually lossless compression of scanned documents", Proceedings of ICIP 2001, Thessaloniki, Greece; ou Wenpeng Ding et al. "Block-based Fast Compression for Compound Images", Proceedings of ICME 2006, Toronto, Canada; ou dans US 2004/179742 A1.

L'invention se propose donc de définir un codec qui sélectionne automatiquement à l'encodage la meilleure représentation des données à partir du type de données image, et effectue la transformée inverse à la décompression à l'aide d'une information contenue dans l'en-tête de fichier.

Chacun des types d'algorithme est plus ou moins adapté à certains types d'images. En particulier, les représentations fréquentielles modélisent très bien les images faiblement contrastées alors que les représentations par différences modélisent bien les images graphiques ou fortement contrastées.

Chacune des méthodes (Différences / Ondelettes) peut être utilisée en mode avec ou sans pertes. La transformation est appliquée à chacune des couches séparément. En revanche, le choix du type de transformation se fait sur la couche considérée comme la plus représentative, par exemple la couche Y dans le cas d'une image ayant préalablement subi une transformée YCbCr, ou bien la couche représentant le mieux l'intensité lumineuse d'une image dans le cas d'une transformation colorimétrique sans perte.

Lorsque l'algorithme utilisé est une transformation par ondelettes, cette transformation peut être effectuée par une implémentation spécifique des ondelettes et du codage binaire, ou bien à l'aide de formats standards tels que le Jpeg2000 ou le PGF. Dans l'exemple suivant, et de manière non limitative, les formats par ondelettes utilisés seront le Jpeg2000 et le PGF.

Lorsque l'algorithme utilisé est une transformation par différences, la transformation par différences consiste à faire la différence entre les valeurs de deux pixels adjacents sur une même couche, puis à quantifier cette différence par un facteur pré-défini Q. Afin de ne pas propager l'erreur, on effectue la différence par rapport à une valeur décompressée définie ci-dessous. De la même manière, si deux sens de différences sont possibles, on détermine, à partir des valeurs décompressées, quel serait le sens générant la différence la plus faible. On calcule alors la différence à la compression et la décompression.

De manière plus détaillée, cette méthode de codage s'effectue de la manière suivante :

On considère une matrice à transformer, représentant une couche d'une image en 2 dimensions. On adopte la nomenclature suivante :

$V_{ij}$ est une valeur initiale de la matrice, pour laquelle i représente le numéro de ligne et j le numéro de colonne. $C_{ij}$ représente la valeur compressée correspondante, et $D_{ij}$ la valeur décompressée correspondante. Ainsi, pour une matrice de 5x5, on a la répartition des valeurs suivantes :

| V11 | V12 | V13 | V14 | V15 | C11 | C12 | C13 | C14 | C15 | D11 | D12 | D13 | D14 | D15 |
|-----|-----|-----|-----|-----|-----|-----|-----|-----|-----|-----|-----|-----|-----|-----|
| V21 | V22 | V23 | V24 | V25 | C21 | C22 | C23 | C24 | C25 | D21 | D22 | D23 | D24 | D25 |
| V31 | V32 | V33 | V34 | V35 | C31 | C32 | C33 | C34 | C35 | D31 | D32 | D33 | D34 | D35 |
| V41 | V42 | V43 | V44 | V45 | C41 | C42 | C43 | C44 | C45 | D41 | D42 | D43 | D44 | D45 |
| V51 | V52 | V53 | V54 | V55 | C51 | C52 | C53 | C54 | C55 | D51 | D52 | D53 | D54 | D55 |

Prenons un exemple numérique avec les valeurs numériques suivantes pour chaque $V_{ij}$, ainsi qu'un coefficient de quantification Q = 3:

| 0 | 0 | 0 | 0 | 0 |
|---|---|-----|-----|---|
| 0 | 0 | 255 | 253 | 0 |
| 0 | 0 | 255 | 253 | 0 |
| 0 | 0 | 255 | 253 | 0 |
| 0 | 0 | 255 | 253 | 0 |

On effectue les différences ligne par ligne, de la première à la dernière, de gauche à droite. On conserve la première valeur V11 telle quelle.

Dans la première ligne horizontale, on effectue pour chaque valeur V1j, la différence par rapport à la valeur décompressée située à sa gauche D1j-1, puis on quantifie et on arrondit. Ainsi :

$$D11 = C11 = V11 = 0 \; ;$$

$$C12 = \text{ARRONDI} (( V12 - D11 ) / Q) = \text{ARRONDI} ( ( 0 - 0 ) / 3 ) = 0$$

$$D12 = \text{ARRONDI} ( D11 + ( C12 * Q ) ) = \text{ARRONDI} ( 0 + 0 * 3 ) = 0$$

Ainsi de suite jusqu'à la fin de la ligne.

Pour chacune des lignes suivantes, on calcule la valeur compressée Cil de la première case de ladite ligne en effectuant une différence entre la valeur courante Vil et la valeur décompressée de la ligne juste au-dessus Di-1 1 : On aura donc, par exemple pour la 2e ligne :

$$C21 = \text{ARRONDI} (( V21 - D11 ) / Q) = \text{ARRONDI} ( ( 0 - 0 ) / 3 ) = 0$$

$$D21 = \text{ARRONDI} ( D11 + ( C21 * Q) ) = \text{ARRONDI} ( 0 + ( 0 * 3 ) ) = 0$$

Pour chacune des valeurs suivantes de la ligne, on calcule pour chaque valeur Vij la différence horizontalement si (D$i$-$l$ $j$ — D $i$-$l$ $j$-$l$) est inférieur en valeur absolue à (D$i$ $j$-$l$ - D $i$-$l$ $j$-$l$), et on calcule la différence verticalement dans le cas contraire.

Ainsi, pour la valeur V22 :

- La valeur absolue de (D12-D11) vaut 0 ;
- La valeur absolue de (D21-D11) vaut 0 ;
- Les deux valeurs étant égales, on choisit la différence verticale ;
- On calcule donc la valeur compressée : C22 = ARRONDI (( V22 - D12 ) / Q) = ARRONDI (( 0 - 0 ) / 3 ) = 0
- On calcule ensuite la valeur décompressée : D22 = ARRONDI ( D12 + ( C22 * Q)) = ARRONDI ( 0 + 0 * 3 ) = 0

Ainsi, pour la valeur V23 :

- La valeur absolue de (D13-D12) vaut 0 ;
- La valeur absolue de (D22-D12) vaut 0 ;
- Les deux valeurs étant égales, on choisit la différence verticale ;
- On calcule donc la valeur compressée : C23 = ARRONDI (( V23 -D13) / Q) = ARRONDI (( 255 - 0 ) / 3 ) = 85
- On calcule ensuite la valeur décompressée : D23 = ARRONDI ( D13 + ( C23 * Q)) = ARRONDI ( 0 + 85 * 3 )=255

Ainsi, pour la valeur V24 :

- La valeur absolue de (D14-D13) vaut 0 ;
- La valeur absolue de (D23-D13) vaut 255 ;
- La valeur de la première différence (horizontale) étant la plus petite, on choisit la différence horizontale ;
- On calcule donc la valeur compressée : C24 = ARRONDI (( V24 - D23) / Q) = ARRONDI (( 253 - 255 ) / 3 ) = -1
- On calcule ensuite la valeur décompressée : D24 = ARRONDI ( D23 + ( C24 * Q) ) = ARRONDI ( 255 - 1 * 3 ) = 252

Par itération, on obtient pour cette matrice les valeurs compressées et décompressées suivantes :

| V11 | V12 | V13 | V14 | V15 | | C11 | C12 | C13 | C14 | C15 | | D11 | D12 | D13 | D14 | D15 |
|-----|-----|-----|-----|-----|--|-----|-----|-----|-----|-----|--|-----|-----|-----|-----|-----|
| V21 | V22 | V23 | V24 | V25 | | C21 | C22 | C23 | C24 | C25 | | D21 | D22 | D23 | D24 | D25 |

(suite)

| V31 | V32 | V33 | V34 | V35 | C31 | C32 | C33 | C34 | C35 | D31 | D32 | D33 | D34 | D35 |
|---|---|---|---|---|---|---|---|---|---|---|---|---|---|---|
| V41 | V42 | V43 | V44 | V45 | C41 | C42 | C43 | C44 | C45 | D41 | D42 | D43 | D44 | D45 |
| V51 | V52 | V53 | V54 | V55 | C51 | C52 | C53 | C54 | C55 | D51 | D52 | D53 | D54 | D55 |
| | | | | | | | | | | | | | | |
| 0 | 0 | 0 | 0 | 0 | 0 | 0 | 0 | 0 | 0 | 0 | 0 | 0 | 0 | 0 |
| 0 | 0 | 255 | 253 | 0 | 0 | 0 | 85 | -1 | -84 | 0 | 0 | 255 | 252 | 0 |
| 0 | 0 | 255 | 253 | 0 | 0 | 0 | 0 | 0 | 0 | 0 | 0 | 255 | 252 | 0 |
| 0 | 0 | 255 | 253 | 0 | 0 | 0 | 0 | 0 | 0 | 0 | 0 | 255 | 2 | 0 |
| 0 | 0 | 255 | 253 | 0 | 0 | 0 | 0 | 0 | 0 | 0 | 0 | 255 | 252 | 0 |

Lorsque Q = 1, cette transformation est sans perte. Lorsque Q > 1. elle est avec pertes.

On appelle cette transformation des données « APE »

Une fois cette transformation « APE » effectuée, on applique une transformation RLE (Run-Length Encoding) puis une compression à l'aide de l'algorithme Bzip2 sur les données obtenues. La chaîne de compression est alors la suivante, pour chacune des couches de l'image : APE, RLE, Bzip

Dans un mode de réalisation, on applique deux méthodes de compression par ondelettes, par exemple Jpeg2000 et le PGF, ainsi que la chaîne de compression APE, RLE, 'Bzip, décrite plus haut, sur 3 images différentes :

- La figure 1 est une copie d'écran, contenant beaucoup de texte sur fond blanc, et représente un exemple d'image de type « graphique » ;
- La figure 2 est une photographie de ville avec de forts contrastes entre les bâtiments et le ciel, les lumières, etc. Elle représente un exemple d'image de type « fort contraste »;
- La figure 3 est une photographie d'un meeting aérien contenant beaucoup de dégradés de couleurs. Elle représente un exemple d'image de type « faible contraste ».

On représente l'efficacité de chacune des méthodes (APE / RLE / Bzip, Jpeg2000, PGF) à l'aide d'une courbe dite de PSNR, qui représente la qualité de l'image restituée après compression puis décompression. A chaque paramètre d'encodage correspond un poids de fichier et une valeur de qualité dite PSNR, comprise entre 0 et 100. Le PSNR est une mesure standard, ici calculée sur la couche Y, 100 étant la meilleure qualité possible et correspond à une compression sans perte. On considère qu'une compression est plus performante qu'une autre lorsque, à poids équivalent, elle possède un meilleur PSNR, ou lorsque à PSNR équivalent, le poids est inférieur.

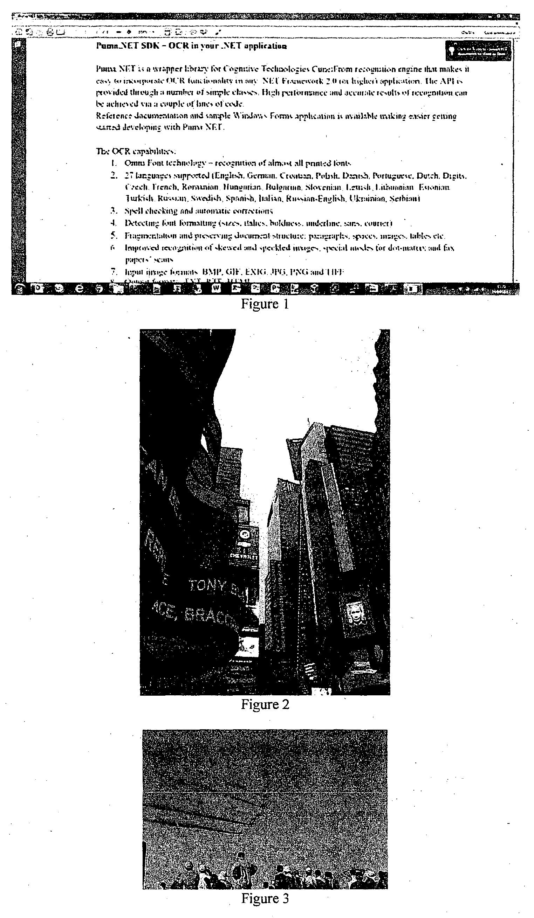

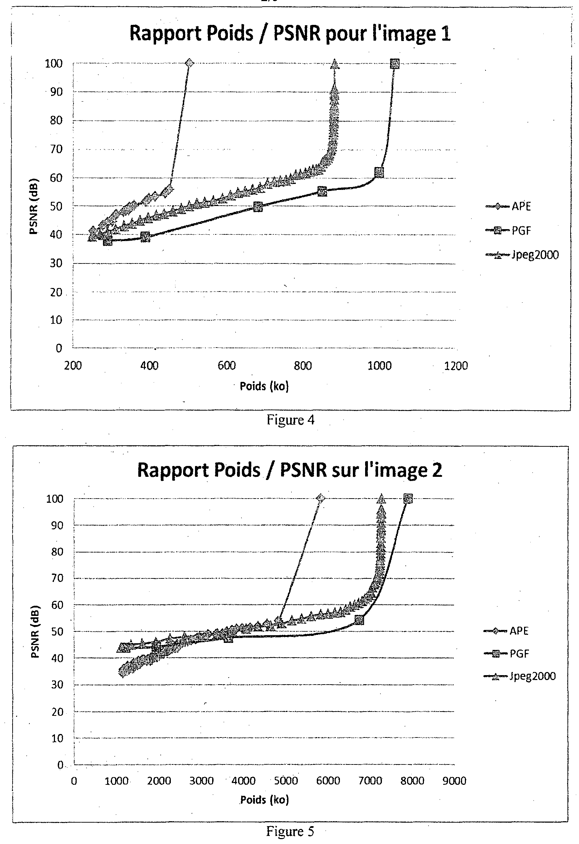

La figure 4 et le tableau ci-dessous représentent l'évolution du PSNR en fonction du poids d'image pour l'image représentée en figure 1.

| Algorithme | Programe / Parametres / Facteur de quantification | Poids (ko) | PSNR |
|---|---|---|---|
| APE + RLE + zlib | Q=80 | 502 | 100 |
| PGF | PGFConsole; -q 0 | 1038 ' | 100 |
| Jpeg2000 | OpenJpeg, image_to_j2k, pas de paramètre | 882 | 100 |

La figure 5 et le tableau ci-dessous représentent l'évolution du PSNR en fonction du poids d'image pour l'image représentée en figure 2.

| Algorithme | Programme / Parametres / Facteur de quantification | Poids (ko) | PSNR |
|---|---|---|---|
| APE + RLE + zlib | Q = 1 | 5832 | 100 |
| PGF | PGFConsole, -q 0 | 7893 | 100 |
| Jpeg2000 | OpenJpeg, image_to_j2k, pas de paramètre | 7266 | 100 |
| APE + RLE + zlib | Q=22 | 1155 | 34 |
| PGF - | PGFConsole, -q 0 | 1212 | 43 |
| Jpeg2000 | OpenJpeg, image_to_j2k, pas de paramètre | 1112 | 44 |

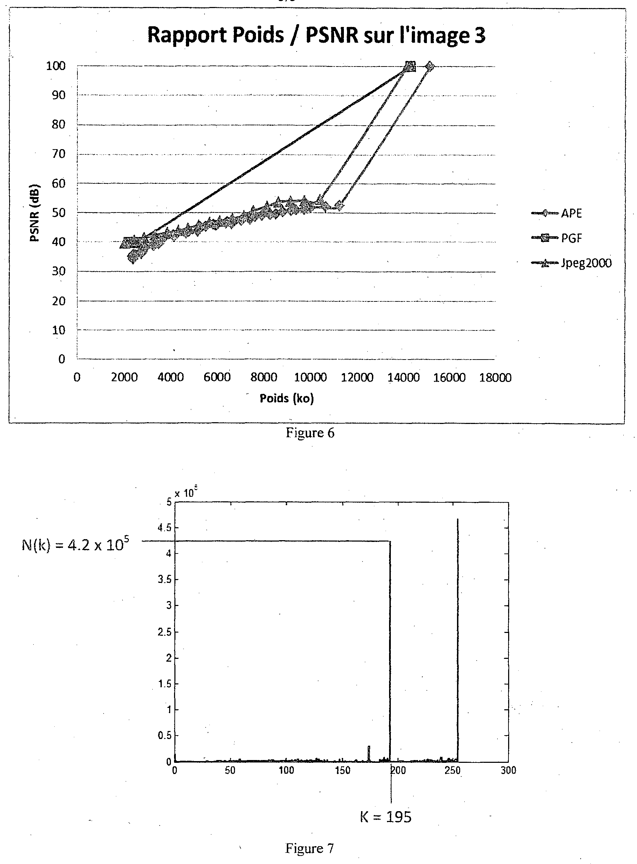

La figure 6 et le tableau ci-dessous représentent l'évolution du PSNR en fonction du poids d'image pour l'image représentée en figure 3 :

| Algorithme | Programe / Parametres / Facteur de quantification | Poids (ko) | PSNR |
|---|---|---|---|
| APE + RLE + zlib | Q=1. | 15175 | 100 |
| PGF | PGFConsole, -q 0 | 14303 | 100 |
| Jpeg2000 | OpenJpeg, image_to_j2k, pas de paramètre | 14165 | 100 |

On constate donc que :

- Les codages par ondelettes ont des performances poids/qualités tendanciellement proches, alors que l'APE obtient des résultats radicalement différents ;
- Dans le cas de l'image 1 (Image graphique), l'APE est meilleur dans tous les cas ;
- Dans le cas de l'image 2 (image fortement contrastée), l'APE est meilleur sur les hautes qualités, les codages par ondelettes pour les plus fortes compressions ;
- Dans le cas de l'image 3 (image faiblement contrastée), les codages par ondelettes sont meilleurs dans tous les cas.

Dans un premier mode de réalisation de l'invention, le choix de l'algorithme s'effectue après la transformation colorimétrique, YCbCr dans les exemple illustrés.
Pour choisir l'algorithme, on pratique de la manière suivante :

- on compte le nombre de chacune des valeurs sur la couche la plus représentative (idéalement Y) ;
- On construit un histogramme des valeurs tel que représenté dan la figure 7:
- On note, pour chaque valeur k généralement comprise entre 0 et 255, le nombre de fois n(k) que cette valeur est présente dans la couche :

  • Le nombre de pixels de la couche est donc égal à la somme des n(k) :

$$N = \sum_{k=0}^{255} n(k)$$

- La métrique « FD2 » donne une idée de l'aspect « à pic » de l'histogramme :

$$FD2 = \sum_{k=0}^{255} \left( \frac{\max\left[\, n(k) - 0.4 * \big(n(k-1) + n(k+1)\big) - 0.1 * \big(n(k-2) + n(k+2)\big), 0 \,\right]}{N} \right)^2$$

- On effectue la métrique FD2, *sur tout ou partie d'une couche de l'image*
- Plus FD2 est important, plus les valeurs sont concentrées

|  | Image1 | Image2 | Image3 |
|---|---|---|---|
| **FD2** | 0,18 | 0,00065 | 1,1E-06 |

On voit donc bien que les différents types d'images appartiennent à des ordres de grandeur différents, et que la formule est bien discriminante.

- On sépare l'image de la manière suivante :

  o FD2 > 0.075 : Image graphique

o FD2 > 10⁴ : Image fortement contrastée

o Sinon : Image faiblement contrastée

- Si FD2 > 0.075, on choisit une transformée par différences, par exemple APE + RLE + zlib;

- Dans le cas d'une image fortement contrastée, on choisit une transformée par différences, par exemple APE + RLE + zlib dans les modes sans perte et presque sans perte, et un codage par ondelettes dans les autres cas

- Dans le cas d'une image faiblement contrastée, on effectue un codage par ondelettes dans tous les cas, par exemple du type JPEG ou PGF.

- On stocke dans l'en-tête de fichier le type d'image

- On effectue les opérations inverses à la décompression en fonction du type d'image

Dans un second mode de réalisation, on compte le nombre de triplets de couleurs RGB uniques de l'image, que l'on ramène à la taille de l'image, de préférence en le divisant par un coefficient fonction du nombre de pixels de l'image. Lorsque le nombre de triplets de couleur RGB uniques de l'image, ramené à la taille de l'image, est en-dessous d'un seuil prédéfini, on considère l'image comme étant une image graphique ; lorsqu'il est au-dessus d'un second seuil, plus élevé que le premier, on considère l'image comme étant une image faiblement contrastée. Entre ces deux seuils, on considère l'image comme étant fortement contrastée,

On applique alors les mêmes transformations que dans le premier mode de réalisation :

- Dans le cas d'une image fortement contrastée, on choisit une transformée par différences, par exemple APE + RLE + zlib dans les modes sans perte et presque sans perte, un codage par ondelettes sinon
- On stocke dans l'en-tête de fichier le type d'image
- On effectue les opérations inverses à la décompression en fonction du type d'image

De façon plus générale :
l'invention est définie dans l'ensemble des revendications ici jointes.

Afin de classifier l'image, chaque nuance correspondant à une valeur de nuance (de préférence k=0-255 dans le cas de couches 8 bits), pour chaque nuance on calcule le nombre n(k) de pixels présentant cette nuance ; puis, on calcule un indicateur de concentration des nuances de l'image autour de la valeur k, par exemple :

$$E(k) = n(k) - 0{,}4 \left( n(k\text{-}1) + n(k\text{+}1) \right) - 0{,}1 \left( n(k\text{-}2) + n(k\text{+}2) \right) \,,$$

en faisant la différence entre le nombre de pixels n(k) de la nuance (k) considérée et une proportion de ceux de ses voisines, de préférence de ses voisines de premier rang (k-1 et k+1) et de deuxième rang (k-2 et k+2), la proportion respective étant plus réduite pour les voisines de rang le plus élevé, par exemple une proportion de 80% pour chacune des voisines de premier rang, c'est-à-dire les voisines immédiates de la nuance (k) considérée et de 20% pour chacune des voisines de deuxième rang, c'est-à-dire les voisines immédiates des voisines de premier rang.

De préférence, la somme des proportions des valeurs voisines est égale à un. Dans l'exemple illustré, on a effectivement la somme des proportions qui est égale à 1 (0,4+0,4+0,1+0,1=1).

On conserve ensuite l'indicateur de concentration des nuances autour des valeurs k (E(k)) supérieurs à un certain seuil, de préférence les indicateurs de concentration positifs, c'est-à-dire Max(E(k),0), et on ramène chacun de ces indicateurs de concentration à la taille de l'image, par exemple au nombre (N) total des pixels de l'image.

De préférence, pour une meilleure discrimination entre les types d'images, c'est-à-dire pour faciliter la classification, on élève ensuite le résultat Max(E(k))/N à une puissance strictement supérieure à 1, de préférence égale à 2.

On obtient ensuite une métrique (FD) en compilant ces résultats pour l'ensemble de la couche, de préférence en faisant la somme des résultats ainsi obtenus pour l'ensemble des nuances de la couche. Ainsi, dans l'exemple illustré :

$$FD2 = \Sigma \left( Max(E(k))/N \right)^2 \,,$$

pour k variant de 0 à 255.

**Revendications**

1. Procédé de compression d'une image, **caractérisé en ce que** :

   - on effectue un calcul d'un index (FD2) représentatif d'une distribution de valeurs d'intensités lumineuses de pixels d'au moins l'ensemble d'une couche de luminosité de l'image, ledit index (FD2) étant calculé comme :

   $$FD2 = \sum_{k=0}^{255} \left( \frac{\max \left[ n(k) - 0.4 * (n(k-1) + n(k+1)) - 0.1 * (n(k-2) + n(k+2)), 0 \right]}{N} \right)^2$$

   ou ;

   ○ le nombre n(k) représente le nombre de pixels ayant valeur de luminosité k dans ladite couche de luminosité;
   ○ N représente le nombre total de pixels de l'image ; puis,

   - Selon ledit index (FD2), on classifie l'image dans l'une des trois classes suivantes :

   ○ une première classe si l'image est d'un type graphique ;
   ○ une deuxième classe si l'image est d'un type fortement contrastée;
   ○ une troisième classe si l'image est d'un type faiblement contrastée: et,

   - on choisit un traitement de compression en fonction de la classe de l'image :

   ○ si l'image est de la première classe, on choisit un traitement de compression comprenant une différence entre la valeur originale d'un pixel de la couche de luminosité et la valeur décompressée d'un pixel adjacent de ladite couche ;
   ○ si l'image est de la troisième classe, on choisit un traitement de compression du type fréquentiel; et,
   ○ si l'image est de la deuxième classe on choisit:

     ■ pour une compression sans perte, on utilise un traitement comprenant une différence entre la valeur originale d'un pixel de la couche de luminosité et la valeur décompressée d'un pixel adjacent de ladite couche, et,
     ■ dans les autres cas on utilise un traitement de compression du type fréquentiel.

2. Procédé selon la revendication 1, **caractérisé en ce que** l'on applique une transformation YCbCr à des données d'entrée de type RGB ou BGR

3. Procédé selon l'une des revendications 1 à 2, **caractérisé en ce que** les données d'entrée avant ou après transformation colorimétrique sont de type YCbCr ou YUV, et que la couche de luminosité est la couche Y.

**Patentansprüche**

1. Verfahren zum Komprimieren eines Bildes, **dadurch gekennzeichnet, dass**:

   - eine Berechnung eines Index (FD2), der repräsentativ für eine Verteilung von Lichtstärkewerten von Pixeln von mindestens der Gesamtheit einer Helligkeitsschicht des Bildes ist, ausgeführt wird, wobei der Index (FD2) berechnet wird als:

   $$FD2 = \sum_{k=0}^{255} \left( \frac{\max[n(k) - 0,4*(n(k-1)+n(k+1)) - 0,1*(n(k-2)+n(k+2)),0]}{N} \right)^2$$

   wobei:

° die Anzahl n(k) die Anzahl an Pixeln darstellt, die einen Helligkeitswert k in der Helligkeitsschicht aufweisen;
° N die Gesamtanzahl an Pixeln des Bildes darstellt; danach

- je nach Index (FD2) das Bild in eine der folgenden drei Klassen eingestuft wird:

° eine erste Klasse, wenn das Bild von einem grafischen Typ ist;
° eine zweite Klasse, wenn das Bild von einem stark kontrastierten Typ ist;
° eine dritte Klasse, wenn das Bild von einem schwach kontrastierten Typ ist; und

- eine Kompressionsbearbeitung in Abhängigkeit von der Klasse des Bildes ausgewählt wird:

° wenn das Bild aus der ersten Klasse ist, wird eine Kompressionsbearbeitung ausgewählt, die eine Differenz zwischen dem Originalwert eines Pixels der Helligkeitsschicht und dem dekomprimierten Wert eines an die Schicht angrenzenden Pixels umfasst;
° wenn das Bild aus der dritten Klasse ist, wird eine Kompressionsbearbeitung vom Frequenztyp ausgewählt; und
° wenn das Bild aus der zweiten Klasse ist, wird Folgendes ausgewählt:

• für eine verlustfreie Kompression wird eine Bearbeitung verwendet, die eine Differenz zwischen dem Originalwert eines Pixels der Helligkeitsschicht und dem dekomprimierten Wert eines an die Schicht angrenzenden Pixels verwendet, und
• in den anderen Fällen wird eine Kompressionsbearbeitung vom Frequenztyp verwendet.

2. Verfahren nach Anspruch 1, **dadurch gekennzeichnet, dass** eine YCbCr-Transformation auf die Eingangsdaten vom Typ RGB oder BGR angewendet wird.

3. Verfahren nach einem der Ansprüche 1 bis 2, **dadurch gekennzeichnet, dass** die Eingangsdaten vor oder nach einer kolorimetrischen Transformation vom Typ YCbCr oder YUV sind, und die Helligkeitsschicht die Y-Schicht ist.

**Claims**

1. Method for compressing an image, **characterised in that**:

- an index (FD2) representative of a distribution of light intensity values of pixels of at least all of a brightness layer of the image is calculated, said index (FD2) being calculated as:

$$FD2 = \sum_{k=0}^{255} \left( \frac{\max[n(k) - 0.4*(n(k-1) + n(k+1)) - 0.1*(n(k-2) + n(k+2)), 0]}{N} \right)^2$$

where:

o the number n(k) represents the number of pixels having the brightness value k in said brightness layer;
o N represents the total number of pixels of the image; then,

- according to said index (FD2), the image is classified in one of the following three categories:

o a first category if the image is of a graphic type;
o a second category if the image is of a high-contrast type;
o a third category if the image is of a low-contrast type; and,

- a compression processing type is selected according to the category of the image:

o if the image is of the first category, a compression processing comprising a difference between the original value of a pixel of the brightness layer and the decompressed value of a pixel adjacent to said layer is selected;
o if the image is of the third category, a frequency type compression processing is selected;

o if the image is of the second category, the following are selected:

■ for lossless compression, a processing is used comprising a difference between the original value of a pixel of the brightness layer and the decompressed value of a pixel adjacent to said layer, and,
■ in the other cases, a frequency type compression processing is used.

2. Method according to claim 1, **characterised in that** a YCbCr transformation is applied to RGB or BGR type input data.

3. Method according to one of claims 1 to 2, **characterised in that** the input data before or after colorimetric transformation are of YCbCr or YUV type, and that the brightness layer is the Y layer.

EP 3 186 967 B1

Figure 1

Figure 2

Figure 3

11

## Rapport Poids / PSNR pour l'image 1

Figure 4

## Rapport Poids / PSNR sur l'image 2

Figure 5

**Rapport Poids / PSNR sur l'image 3**

Figure 6

$$N(k) = 4.2 \times 10^5$$

$$K = 195$$

Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004179742 A1

**Littérature non-brevet citée dans la description**

- **XIN LI et al.** Block-based segmentation and adaptive coding for visually lossless compression of scanned documents. *Proceedings of ICIP,* 2001

- **WENPENG DING et al.** Block-based Fast Compression for Compound Images. *Proceedings of ICME,* 2006